# FASCICULE DE BREVET EUROPEEN

(11) **EP 2 872 745 B1**
(45) Date de publication et mention de la délivrance du brevet: **27.09.2017**
(21) Numéro de dépôt: 13744675.3
(22) Date de dépôt: 02.07.2013
(51) Int. Cl.: F01D 5/28, B29B 11/16, B23P 15/02

(54) **PROCÉDÉ ET SYSTÈME DE DÉCOUPE D'UNE PRÉFORME DESTINÉE À LA FABRICATION D'UNE PIÈCE DE TURBOMACHINE**
VERFAHREN UND VORRICHTUNG ZUM SCHNEIDEN EINER VORFORM FÜR DIE HERSTELLUNG EINES BAUTEILS EINER TURBOMASCHINE
METHOD AND SYSTEM FOR CUTTING A PREFORM INTENDED FOR THE PRODUCTION OF A TURBOMACHINE PART

(30) Priorité: 16.07.2012 FR 1256870
(43) Date de publication de la demande: 20.05.2015
(73) Titulaire: Snecma, 75015 Paris (FR)
(72) Inventeur: MARCHAL, Yann, F-77550 Moissy-Cramayel Cedex (FR); MAROLLE, Philippe, F-77550 Moissy-cramayel Cedex (FR); ROUSSEAU, Claire, F-77550 Moissy-cramayel Cedex (FR)
(74) Mandataire: Regimbeau
(86) Numéro de dépôt international: PCT/FR2013/051558
(87) Numéro de publication internationale: WO 2014/013157

(56) Documents cités:
- EP-A1- 1 526 285
- EP-A1- 1 777 063
- FR-A1- 2 940 172
- JP-A- 2 182 388

## Description

### DOMAINE TECHNIQUE GENERAL

L'invention concerne un procédé de découpe d'une préforme, et un système de découpe.

### ETAT DE L'ART

Certaines pièces de turbomachines, comme par exemple des aubes de soufflante en matériau composite, peuvent être fabriquées à partir d'une préforme.

Cette préforme comprend un tissage d'une pluralité de fils ou fibres de tissage, qui comportent des fils de chaîne et des fils de trame. Dans ces deux groupes de fils sont prévus des fils de structure, assurant la structure de la préforme, et des fils traceurs identifiables visuellement des autres et disposés régulièrement au moins à la surface de la préforme.

Un exemple de fabrication d'un telle préforme est connue du document EP 1526285, ainsi que du document EP 1 777 063.

La préforme est découpée selon la forme et les dimensions des parties constitutives de l'aube, et placée dans un moule.

Un liant comprenant une résine thermodurcissable est ensuite injecté dans le moule, afin d'imprégner toute la préforme. Après chauffage du moule, la pièce moulée est sortie du moule.

L'étape de découpe de la préforme nécessite de découper la préforme selon un contour de découpe donc la forme correspond à ce qui est attendu dans la suite de la fabrication.

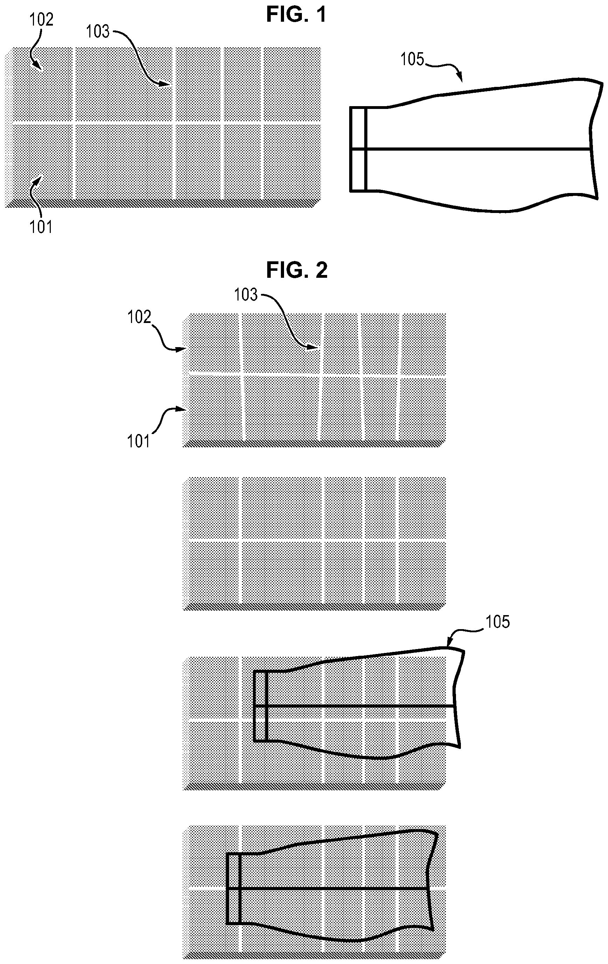

La Figure 1 illustre une préforme 101 constituée de fils de tissage répartis en tant que fils de chaîne et en tant que fils de trame. Ces fils de tissage comprennent des fils 102 de structure et des fils 103 identifiables visuellement.

Un contour 105 de découpe pré-calculé est également illustré. Ce contour 105 de découpe est calculé en supposant que les fils de chaîne et les fils de trame sont disposés à 90° les uns par rapport aux autres.

Or, au stade de la découpe, la préforme n'est pas encore figée, et est donc malléable et déformable. Ceci résulte du fait que la préforme n'est qu'une masse de fils enchevêtrés par le tissage.

Il est donc nécessaire de vérifier que la préforme n'est pas déformée, c'est-à-dire que les fils de chaîne et les fils de trame ne présentent pas entre eux un angle différent de 90°.

En pratique, un opérateur observe les fils identifiables visuellement pour constater si une telle déformation est présente. Si tel est le cas, comme cela est illustré en Figure 2, les fils de chaîne et les fils de trame sont ajustés par l'opérateur.

L'étape suivante consiste à positionner la préforme par rapport à la machine de découpe. Cette opération est réalisée par un opérateur, qui positionne la préforme de sorte à ce qu'elle soit disposée au niveau d'un point d'origine et d'axes de découpe de la machine de découpe.

Ce procédé et ce système de découpe présentent plusieurs inconvénients.

L'étape de vérification de la déformation de la préforme est longue et fastidieuse, ce qui augmente le temps de fabrication et accroît les coûts. Des risques d'erreurs sont également présents.

En outre, l'étape de positionnement de la préforme par rapport à la machine de découpe rallonge également le temps de fabrication, et accroît les risques de défauts dans la découpe.

Dans l'art antérieur, le document JP02182388 décrit un procédé de découpe laser d'un vêtement, comprenant une étape de comparaison d'une image du vêtement avec une image de référence, dans le but de corriger l'angle d'inclinaison d'un miroir du système.

### PRESENTATION DE L'INVENTION

L'invention propose de pallier les inconvénients précités.

A cet effet, l'invention propose un procédé de découpe d'une préforme destinée à la fabrication d'une pièce de turbomachine et constituée d'un tissage d'une pluralité de fils de tissage, lesdits fils de tissage comprenant des fils identifiables visuellement, selon un contour de découpe calculé à partir d'un modèle de préforme dans lequel les fils de tissage présentent un agencement de référence, ledit procédé comprenant les étapes consistant à :
- prendre une image de la préforme,
- traiter l'image de sorte à déterminer une déviation dans l'agencement des fils de tissage identifiables visuellement par rapport à l'agencement de référence,
- corriger le contour de découpe en fonction de ladite déviation,
- découper la préforme selon le contour de découpe corrigé.
L'invention propose un autre procédé de découpe d'une préforme selon la revendication indépendante 3.

L'invention propose aussi un système de découpe selon la revendication indépendante 7.

Selon un mode de réalisation, une première étape, conforme au mode de réalisation venant d'être décrit, consiste à corriger automatiquement le positionnement de la machine de découpe par rapport à la préforme, et une deuxième étape, conforme au mode de réalisation précédemment décrit, consiste à corriger le contour de découpe en fonction d'une déviation dans l'agencement des fils de tissage.

Dans une application, l'invention concerne par exemple une aube de turbomachine, dans lequel on découpe une préforme de cette aube, caractérisé en ce que la découpe de cette préforme est mise en oeuvre selon un procédé conforme à ce qui a été décrit précédemment.

L'invention présente de nombreux avantages.

Un avantage de l'invention est de proposer une solution améliorant la qualité et la précision de la découpe.

Un autre avantage de l'invention est de proposer une solution réduisant les temps de fabrication, et moins coûteuse.

Enfin, un autre avantage de l'invention est d'accroître la standardisation de la fabrication, qui est rendue robuste et répétable.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- Les Figures 1, déjà commentées, sont une représentation d'une préforme et d'un contour de découpe selon l'art antérieur ;
- La Figure 2, déjà commentée, est une représentation d'un procédé de découpe selon l'art antérieur ;
- La Figure 3 est une représentation d'une préforme dans un métier à tisser ;
- La Figure 4 est une représentation d'une préforme 4 présentant un tissage dont l'agencement est de référence ;
- La Figure 5 est une représentation d'un système dont l'agencement est de référence ;
- Les Figures 6 et 7 sont une représentation d'un premier mode de réalisation d'un procédé de découpe selon l'invention;
- Les Figures 8 et 9 sont une représentation d'un deuxième mode de réalisation d'un procédé de découpe selon l'invention.

### DESCRIPTION DETAILLEE

### Préforme à découper

La préforme 1 comprend un tissage d'une pluralité de fils 9 de tissage. Les fils 9 de tissage sont en général répartis en fils de chaîne et en fils de trame.

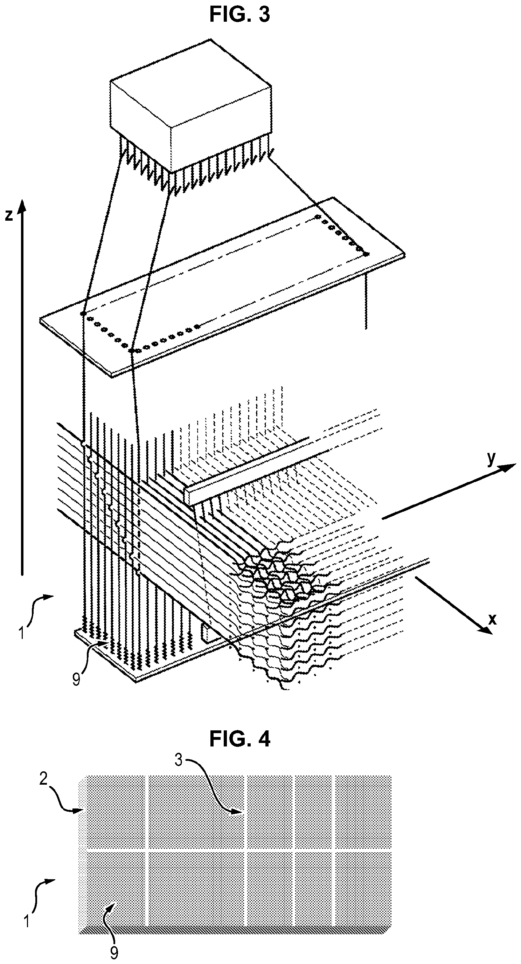

En Figure 3, on a représenté schématiquement un métier à tisser de type Jacquard sur lequel sont montés des fils de chaîne, qui sont orientés selon la direction longitudinale (flèche x), et qui s'étendent sur plusieurs couches superposées selon la direction verticale (flèche z), et des fils de trame orientés selon la direction transversale (flèche y).

Ce type de tissage est connu par exemple du document FR2861143. Le tissage est, dans un mode de réalisation, tridimensionnel.

Les fils 9 de tissage appartiennent, par exemple, au groupe formé des fibres de carbone, des fibres de verre, des fibres de silice, des fibres de carbure de silicium, des fibres d'alumine, des fibres aramides et des fibres de polyamides aromatiques.

Comme illustré schématiquement en Figure 4, les fils 9 de tissage comprennent des fils 2 de structure, utilisés pour le tissage de la structure de la préforme, et des fils 3 identifiables visuellement.

Les fils 3 identifiables visuellement sont des fils situés essentiellement à la surface de la préforme, et présente une couleur distincte des fils 2 de structure, permettant leur identification visuelle.

Les fils 3 sont à la fois disposés en tant que fils de chaîne (direction longitudinale) et en tant que fils de trame (direction transversale).

Dans un mode de réalisation, les fils 2 de structure pour le tissage en trois dimensions sont des fibres de carbone, et les fils 3 identifiables visuellement sont formés de fibres de verre ou en kevlar.

De cette façon, les fils 3 identifiables visuellement apparaissent de couleur blanche sur le reste de la préforme qui est noire, et sont donc visibles.

### Système de découpe

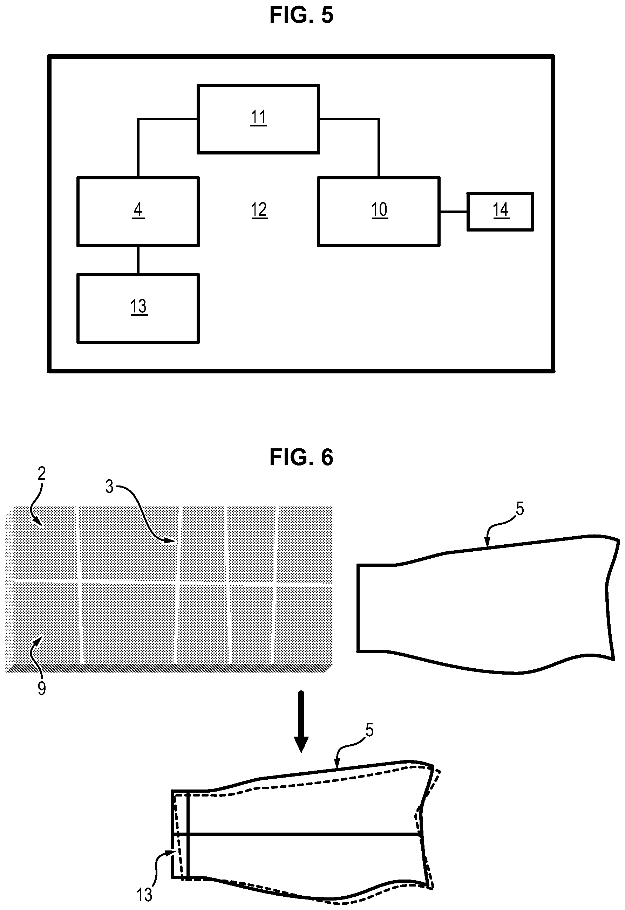

La découpe de la préforme peut notamment être réalisée dans un système 12 de découpe, schématiquement illustré en Figure 5.

Le système 12 de découpe comprend une machine 4 de découpe. Divers technologies de machine de découpe peuvent être utilisées : découpe par jet d'eau, et/ou par des moyens mécaniques, et/ou par découpe laser.

La machine 4 de découpe comprend, de manière classique, des moyens de réception et de maintien de la préforme à découper.

Le système 12 de découpe comprend en outre une mémoire 13, pour stocker notamment un contour de découpe pré-calculé, qui va être utilisé par la machine 4 de découpe.

Le système 12 comprend un dispositif 10 d'imagerie, configuré pour prendre une ou plusieurs images. Ce dispositif 10 d'imagerie est par exemple de type appareil photo ou caméra.

Enfin, le système 12 de découpe comprend une unité 11 de traitement, configurée pour contrôler la machine de découpe et le dispositif d'imagerie, de sorte à exécuter les modes de réalisation des procédés de découpe décrits ci-après. L'unité 11 de traitement est typiquement un processeur associé à un ou plusieurs programmes de traitement.

Le cas échéant, le système 12 comprend des moyens d'affichage, de type écran, et des moyens d'interaction avec un opérateur (clavier, console, etc.).

### Procédés de découpe

### Premier mode de réalisation

La préforme doit être découpée. Cette découpe est en général menée par la machine 4 de découpe, dans le système 12 de découpe.

La machine 4 de découpe est réglée, de manière classique, pour réaliser une découpe selon un contour 5 de découpe. Ce contour est le contour d'une surface bidimensionnelle, mais qui va permettre une découpe de la préforme, en général tridimensionnelle.

Ce contour 5 de découpe est pré-calculé par simulation, en fonction de la forme finale souhaitée pour la structure destinée à être construite à partir de la préforme, et est enregistré dans la mémoire 13 du système 12 de découpe.

Ce contour 5 de découpe est notamment pré-calculé à partir d'un modèle de préforme dans lequel les fils de tissage présentent un agencement de référence.

Lors des simulations permettant de calculer ce contour, un modèle de préforme est utilisé, dans lequel les fils de tissage présentent un agencement de référence. Cet agencement de référence correspond au fait que les fils disposés selon un axe longitudinal de la préforme (fils de chaîne) et les fils disposés selon un axe transversal de la préforme (fils de trame) sont disposés orthogonalement les uns par rapport aux autres, comme cela est par exemple illustré en Figure 1. Dans cet agencement de référence, les fils 3 identifiables visuellement ne présentent pas de courbure, mais sont rectilignes.

Or, la préforme 1 étant déformable, cet agencement de référence n'est pas nécessairement conservé au moment où l'on souhaite procéder à l'étape de découpe.

Selon une première étape, on prend une image de la préforme 1. Cette image est prise par le dispositif 10 d'imagerie du système de découpe. En général, il s'agit d'une image comprenant au moins la surface supérieure de la préforme 1.

Il est possible que le dispositif 10 d'imagerie prenne plusieurs images de la préforme 1, mais ceci n'est pas obligatoire.

Dans un mode de réalisation, le dispositif 10 d'imagerie est complété par un outil 14 d'éclairage, orienté vers la préforme, ce qui permet d'améliorer la qualité et le contraste de l'image, pour son traitement ultérieur.

L'image est ensuite traitée, de sorte à déterminer une déviation dans l'agencement des fils de tissage par rapport à l'agencement de référence.

Ce traitement est effectué par l'unité 11 de traitement du système 12, et/ou par une unité de traitement externe, qui communique avec le système 12 par tout moyen de communication connu.

Lors du traitement, l'image de la préforme 1 est comparée avec une image de référence (image du modèle de préforme), dans laquelle les fils de tissage de la préforme 1 présentent un agencement de référence.

En particulier, l'unité de traitement identifie tout d'abord dans l'image les fils 3 identifiables visuellement, par traitement d'image. Après identification de ces fils 3, l'agencement de ces fils 3 est déterminé, en comparant l'orientation des fils 3 disposés principalement selon l'axe longitudinal de la préforme 1, avec les fils 3 disposés principalement selon l'axe transversal de la préforme 1. Cet agencement est ensuite comparé avec l'agencement de référence, afin de déterminer la déviation dans l'agencement.

Par exemple, comme illustré en Figure 6, l'unité de traitement détermine que les fils 3 disposés selon l'axe transversal présentent un angle avec les fils 3 disposés selon l'axe longitudinal différent de 90°, ce qui n'est pas conforme à l'agencement de référence.

La déviation dans l'agencement est par exemple caractérisée par un ensemble d'angles de déviation, pour les fils 3 identifiables visuellement.

L'étape suivante consiste à corriger le contour 5 de découpe en fonction de ladite déviation.

Comme illustré en Figure 6, le contour 5 de découpe, pré-calculé et enregistré dans la mémoire 13, est corrigé, pour donner un contour 13 de découpe corrigé, prenant en compte la déformation de la préforme 1.

Dans un mode de réalisation, le contour 13 de découpe corrigé est calculé de la manière suivante.

L'unité 11 de traitement superpose :
- Une image de la préforme dans laquelle les fils 9 de tissage présentent un agencement de référence, et
- L'image de la préforme prise par le dispositif 10 d'imagerie.

L'unité 11 de traitement compare les positions des intersections des fils 3 identifiables visuellement entre eux dans le cas de l'image prise par le dispositif 10 avec les positions des intersections des fils 3 identifiables visuellement entre eux dans l'agencement de référence.

En outre, l'unité 11 de traitement compare également :
- les positions des intersections entre les fils 3 identifiables visuellement présentant un agencement de référence et le contour 5 de découpe, avec
- les positions des intersections entre les fils 3 identifiables visuellement de l'image prise et le contour 5 de découpe.

Si l'unité 11 de traitement constate la présence d'écarts, le contour 5 de découpe est modifié et lissé conformément à la valeur de ces écarts, pour donner le contour 13 de découpe corrigé.

Dans un mode de réalisation, qui peut, le cas échéant, être mis en oeuvre en combinaison avec le mode de réalisation précédent, l'unité 11 de traitement détermine, à partir de l'image de la préforme, la courbure d'un ou plusieurs fils 3 identifiables visuellement. En effet, les fils sont déformables et peuvent ne pas être rectilignes.

L'unité de traitement implémente cette courbure dans un calcul par éléments finis, préréglé à l'avance, qui détermine alors la déviation complète de la préforme par rapport à l'agencement de référence. La courbure des fils 3 est notamment comparée à la courbure théorique de l'agencement de référence.

L'algorithme utilisé est connu de l'état de la technique, et est notamment déjà utilisé pour le calcul du contour 5 de découpe (il s'agit par exemple de l'algorithme du filet, ou «*fishnet algorithm*» selon la terminologie anglo-saxonne).

Le temps de calcul est de l'ordre de 20 secondes.

Etant donné que les fils sont déformés, le contour est donc déformé pour s'adapter à cette déformation.

Grâce au contour 13 de découpe corrigé, on obtient la même découpe qui si la préforme avait été ajustée manuellement par un opérateur avant découpe.

En particulier, on obtient le même positionnement relatif entre les fils et le contour.
Ceci permet d'engendrer une répétabilité du procédé, indépendante de l'opérateur.

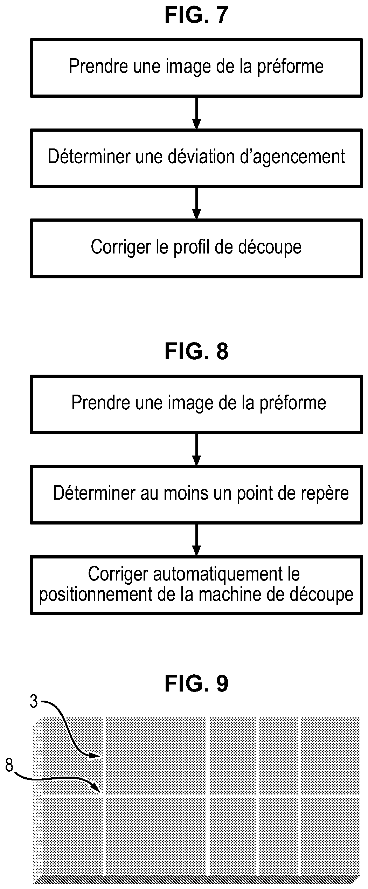

Dans une étape ultérieure, la préforme 1 est découpée dans la selon le contour 13 de découpe corrigé, comme illustré schématiquement en Figure 7. Cette étape est en général mise en oeuvre par une machine 4 de découpe. L'unité 11 de traitement peut par exemple contrôler la machine 4 de découpe de sorte à ce qu'elle découpe la préforme selon ce contour 13. Le cas échéant, elle peut être mise en oeuvre par des moyens de découpe manuels sur la base de ce contour 13 de découpe corrigé.

### Deuxième mode de réalisation

Dans ce mode de réalisation, la préforme 1 doit être découpée par la machine 4 de découpe, dans le système 12 de découpe.

La machine 4 de découpe est réglée pour pratiquer une découpe de la préforme 1 selon un contour 5 de découpe pré-calculé, par exemple du type de celui décrit dans le premier mode de réalisation.

Comme illustré schématiquement en Figure 8, une première étape consiste à prendre une image de la préforme 1 disposée dans la machine 4 de découpe. Cette étape est identique à la prise d'image décrite en référence au premier mode de réalisation.

Une deuxième étape consiste à traiter l'image de sorte à déterminer au moins un point 8 de repère dans le tissage de la préforme 1. Le point 8 de repère est un point identifiable dans l'image, et correspondant à un point de référence dans le tissage de la préforme 1, à des fins de positionnement.

Dans un mode de réalisation, le point 8 de repère correspond à l'intersection de fils 3 identifiables visuellement.

Ce point 8 de repère est par exemple l'intersection entre un fil 3 identifiable visuellement selon l'axe longitudinal de la préforme, avec un fil 3 identifiable visuellement selon l'axe transversal de la préforme. Le fil 3 identifiable visuellement selon l'axe transversal est dans un mode de réalisation le fil disposé du côté d'une extrémité de la préforme 1.

Une fois ce point 8 de repère identifié, la machine 4 de découpe, sous le contrôle de l'unité 11 de traitement, corrige automatiquement son positionnement relativement à la préforme 1, pour permettre une découpe de la préforme selon le contour 5 de découpe pré-calculé.

Ainsi, la machine 4 de découpe aligne ses axes de découpe avec la préforme 1, grâce à l'identification du point 8 de repère.

Dans un mode de réalisation, l'unité 11 de traitement compare la position d'un point de repère de la machine 4, ce point de repère étant préenregistré avec le contour 5 de découpe pré-calculé, avec la position du point 8 de repère de la préforme 1, ce qui permet de mettre en correspondance la position de la préforme 1 dans la machine 4 de découpe avec le contour 5 de découpe avec lequel la machine 4 est réglé pour découper la préforme.

Le positionnement relatif de la machine 4 de découpe par rapport à la préforme 1 se fait donc automatiquement, sans qu'un opérateur n'ait besoin de positionner la préforme 1.

Après correction automatique du positionnement relatif de la machine 4 de découpe par rapport à la préforme 1, la préforme 1 est découpée selon le contour 5 de découpe pré-calculé.

### Troisième mode de réalisation

Dans ce mode de réalisation, les premier et deuxième modes de réalisation sont mis en oeuvre.

La machine 4 de découpe est réglée pour pratiquer une découpe de la préforme 1 selon un contour 5 de découpe pré-calculé à partir d'un modèle de préforme dans lequel les fils 9 de tissage présentent un agencement de référence.

Après mise en place de la préforme 1 dans la machine 4 de découpe, une image de la préforme 1 est prise par le dispositif 10 d'imagerie.

Une première étape consiste à corriger automatiquement le positionnement de la machine 4 de découpe par rapport à la préforme 1.

Cette étape est réalisée conformément au deuxième mode de réalisation, dans lequel un point 8 de référence de la préforme 1 est identifié dans l'image, ce qui permet une correction automatique du positionnement relatif de la machine 4 de découpe par rapport à la préforme 1. En particulier, un point de repère de la machine 4 est aligné avec le point 8 de repère identifié dans le tissage de la préforme 1.

L'image de la préforme 1 est également traitée conformément au premier mode de réalisation, afin de corriger le contour 5 de découpe pré-calculé. Ainsi, comme explicité ci-dessus, une déviation dans l'agencement des fils 3 de tissage est déterminée par rapport à un agencement de référence, afin de corriger le contour 5 de découpe en fonction de ladite déviation.

Dans une étape ultérieure, la machine 4 découpe la préforme 1 selon le contour 13 de découpe corrigé.

Dans ce mode de réalisation, les étapes permettant la découpe sont automatisées, et l'opérateur n'a pas à repositionner la préforme ou à corriger l'agencement de la préforme.

### Exemples de fabrication

Dans une application, l'un des modes de réalisation du procédé est mis en oeuvre dans un procédé de fabrication d'une aube de turbomachine.

La préforme de cette aube est ainsi découpée selon un mode de réalisation du procédé précédemment décrit, de sorte à présenter la forme et les dimensions des parties constitutives de l'aube.

La préforme est ensuite placée dans un moule.

De manière connue, un liant comprenant une résine thermodurcissable est injecté dans le moule, afin d'imprégner toute la préforme. Après chauffage du moule, la pièce moulée est sortie du moule. La pièce moulée est usinée, ce qui lui donne sa forme définitive. L'aube est ainsi obtenue.

Le procédé de découpe et le procédé de fabrication s'appliquent à différentes préformes tissées, qui sont tissées à plat et nécessitent des découpes. Il s'agit par exemple des pièces suivantes : les aubes fan (soufflante), les plateformes fan (soufflante), les cales (la cale de l'aube de soufflante est une pièce qui vient se loger sous le pied de l'aube dans le disque fan), les OGV (« *outlet guide vane* », ou aubage directeur de sortie), les hélices, notamment dites « open rotor » (soufflante non carénée), ainsi que les différentes pièces utilisées pour les essais technologiques.

De manière générale, la solution proposée améliore la qualité et la précision de la découpe. En outre, celle-ci réduit les temps de fabrication, et est donc moins coûteuse.

Enfin, le traitement automatisé des préformes permet d'accroître la standardisation de la fabrication, qui est rendue robuste et répétable.

## Revendications

1. Procédé de découpe d'une préforme (1) destinée à la fabrication d'une pièce de turbomachine et constituée d'un tissage d'une pluralité de fils (9) de tissage, lesdits fils de (9) tissage comprenant des fils (3) identifiables visuellement, selon un contour (5) de découpe calculé à partir d'un modèle de préforme dans lequel les fils (9) de tissage présentent un agencement de référence,
ledit procédé comprenant les étapes consistant à :
- prendre une image de la préforme (1),
- traiter l'image de sorte à déterminer une déviation dans l'agencement des fils (3) de tissage identifiables visuellement par rapport à l'agencement de référence,
- corriger le contour (5) de découpe en fonction de ladite déviation, et
- découper la préforme selon le contour (13) de découpe corrigé.

2. Procédé selon la revendication 1, dans lequel :
- les fils (9) de tissage comprennent des fils disposés selon un axe longitudinal de la préforme (1) et des fils disposés selon un axe transversal de la préforme (1), et
- l'agencement de référence est un agencement dans lequel ces fils longitudinaux sont disposés orthogonalement à ces fils transversaux.

3. Procédé de découpe, par une machine (4) de découpe, d'une préforme (1) destinée à la fabrication d'une pièce de turbomachine et constituée d'un tissage d'une pluralité de fils (9) de tissage, lesdits fils de (9) tissage comprenant des fils (3) identifiables visuellement,
ladite machine (4) étant réglée pour pratiquer une découpe de la préforme (1) selon un contour (5) de découpe,
ledit procédé comprenant les étapes consistant à :
- prendre une image de la préforme (1),
- traiter l'image de sorte à identifier au moins un point (8) de repère dans le tissage de la préforme (1), la machine (4) de découpe corrigeant automatiquement sa position relativement à la préforme (1), à partir de l'identification de ce point (8) de repère, et
- découper la préforme (1) selon le contour (5) de découpe.

4. Procédé selon la revendication 3, dans lequel le point (8) de repère correspond à l'intersection de fils (3) identifiables visuellement.

5. Procédé de découpe, par une machine (4) de découpe, d'une préforme (1) destinée à la fabrication d'une pièce de turbomachine et constituée d'un tissage d'une pluralité de fils (9) de tissage, lesdits fils de (9) tissage comprenant des fils (3) identifiables visuellement,
ladite machine (4) étant réglée pour pratiquer une découpe de la préforme (1) selon un contour (5) de découpe, dont la forme est calculée en supposant que les fils (9) de tissage présentent un agencement de référence,
ledit procédé comprenant les étapes consistant à :
- corriger automatiquement le positionnement de la machine (4) de découpe par rapport à la préforme (1), selon les étapes de l'une des revendications 3 ou 4, et
- corriger le contour (5) de découpe, selon les étapes de l'une des revendications 1 ou 2.

6. Procédé de fabrication d'une pièce de turbomachine, dans lequel on découpe une préforme de cette pièce, **caractérisé en ce que** la découpe de cette préforme est mise en oeuvre selon un procédé conforme à l'une des revendications 1 à 5, ladite pièce étant choisie parmi : une aube, une plateforme d'une soufflante, une cale, un aubage directeur de sortie, ou une hélice.

7. Système (12) de découpe d'une préforme (1) destinée à la fabrication d'une pièce de turbomachine, et constituée d'un tissage d'une pluralité de fils (9) de tissage, lesdits fils de (9) tissage comprenant des fils (3) identifiables visuellement, **caractérisé en ce qu'**il comprend :
- une machine (4) de découpe de la préforme (1),
- une mémoire (13) dans laquelle un contour (5) de découpe de la préforme (1), calculé à partir d'un modèle de préforme dans lequel les fils (9) de tissage présentent un agencement de référence, est enregistré,
- un dispositif (10) d'imagerie de la préforme (1),
- une unité (11) de traitement, configurée pour contrôler la machine (4) de découpe et le dispositif (10) d'imagerie de sorte à ce qu'ils exécutent une découpe de la préforme comprenant les étapes consistant à :
∘ prendre une image de la préforme (1),
∘ traiter l'image de sorte à déterminer une déviation dans l'agencement des fils (3) de tissage identifiables visuellement par rapport à l'agencement de référence,
∘ corriger le contour (5) de découpe en fonction de ladite déviation, et
∘ découper la préforme selon le contour (13) de découpe corrigé.

8. Système selon la revendication 7, dans lequel :
- les fils (9) de tissage comprennent des fils disposés selon un axe longitudinal de la préforme (1) et des fils disposés selon un axe transversal de la préforme (1), et
- l'agencement de référence est un agencement dans lequel ces fils longitudinaux sont disposés orthogonalement à ces fils transversaux.

9. Système selon l'une des revendications 7 ou 8, dans lequel :
- la machine (4) de découpe est réglée pour pratiquer une découpe de la préforme (1) selon un contour (5) de découpe, et
- l'unité de traitement est configurée pour traiter l'image de sorte à identifier au moins un point (8) de repère dans le tissage de la préforme (1), la machine (4) de découpe étant configurée pour corriger automatiquement sa position relativement à la préforme (1), à partir de l'identification de ce point (8) de repère.

10. Système selon la revendication 9, dans lequel le point (8) de repère correspond à l'intersection de fils (3) identifiables visuellement.

11. Système selon l'une des revendications 7 à 10, comprenant une préforme (1) de pièce de turbomachine, ladite pièce étant choisie parmi: une aube, une plateforme d'une soufflante, une cale, un aubage directeur de sortie, ou une hélice.

## Patentansprüche

1. Verfahren zum Schneiden einer Vorform (1) für die Herstellung eines Bauteils einer Turbomaschine, bestehend aus einer Weberei aus einer Mehrzahl von Webfäden (9), wobei die Webfäden (9) optisch identifizierbare Fäden (3) umfassen, nach einer Schnittkontur (5), die ausgehend von einer Vorlage einer Vorform berechnet ist, in der die Webfäden (9) eine Referenzanordnung aufweisen,
wobei das Verfahren die folgenden Schritte umfasst, die darin bestehen:
- ein Bild von der Vorform (1) aufzunehmen,
- das Bild so zu verarbeiten, dass eine Abweichung in der Anordnung der optisch identifizierbaren Webfäden (3) gegenüber der Referenzanordnung bestimmt wird,
- die Schnittkontur (5) je nach der Abweichung zu korrigieren, und
- die Vorform nach der korrigierten Schnittkontur (13) zu schneiden.

2. Verfahren nach Anspruch 1, wobei:
- die Webfäden (9) nach einer Längsachse der Vorform (1) angeordnete Fäden und nach einer Querachse der Vorform (1) angeordnete Fäden umfassen, und
- die Referenzanordnung eine Anordnung ist, in der diese Längsfäden orthogonal zu diesen Querfäden angeordnet sind.

3. Verfahren zum Schneiden durch eine Schneidmaschine (4) einer Vorform (1), die für die Herstellung eines Bauteils einer Turbomaschine bestimmt ist und aus einer Weberei aus einer Mehrzahl von Webfäden (9) besteht, wobei die Webfäden (9) optisch identifizierbare Fäden (3) umfassen,
wobei die Maschine (4) dafür eingestellt ist, einen Schnitt der Vorform (1) nach einer Schnittkontur (5) auszuführen,
wobei das Verfahren die folgenden Schritte umfasst, die darin bestehen:
- ein Bild von der Vorform (1) aufzunehmen,
- das Bild so zu verarbeiten, dass zumindest ein Orientierungspunkt (8) in der Weberei der Vorform (1) identifiziert wird, die Schneidmaschine (4) ausgehend von der Identifizierung dieses Orientierungspunkts (8) automatisch ihre Position gegenüber der Vorform (1) korrigiert, und
- die Vorform (1) nach der Schnittkontur (5) zu schneiden.

4. Verfahren nach Anspruch 3, wobei der Orientierungspunkt (8) dem Schnittpunkt von optisch identifizierbaren Fäden (3) entspricht.

5. Verfahren zum Schneiden durch eine Schneidmaschine (4) einer Vorform (1), die für die Herstellung eines Bauteils einer Turbomaschine bestimmt ist und aus einer Weberei aus einer Mehrzahl von Webfäden (9) besteht, wobei die Webfäden (9) optisch identifizierbare Fäden (3) umfassen,
wobei die Maschine (4) dafür eingestellt ist, einen Schnitt der Vorform (1) nach einer Schnittkontur (5) auszuführen, deren Form unter der Annahme berechnet wird, dass die Webfäden (9) eine Referenzanordnung aufweisen,
wobei das Verfahren die folgenden Schritte umfasst, die darin bestehen:
- die Positionierung der Schneidmaschine (4) gegenüber der Vorform (1) mit den Schritten eines der Ansprüche 3 oder 4 automatisch zu korrigieren, und
- die Schnittkontur (5) mit den Schritten eines der Ansprüche 1 oder 2 zu korrigieren.

6. Verfahren zur Herstellung eines Bauteils einer Turbomaschine, wobei eine Vorform dieses Bauteils geschnitten wird, **dadurch gekennzeichnet, dass** der Schnitt dieser Vorform nach einem Verfahren gemäß eines der Ansprüche 1 bis 5 eingesetzt wird, wobei das Bauteil unter Folgenden gewählt wird: eine Schaufel, eine Plattform eines Gebläses, ein Keil, eine Auslassführungsleitschaufel oder ein Propeller.

7. System (12) zum Schneiden einer Vorform (1), die für die Herstellung eines Bauteils einer Turbomaschine bestimmt ist und aus einer Weberei aus einer Mehrzahl von Webfäden (9) besteht, wobei die Webfäden (9) optisch identifizierbare Fäden (3) umfassen, **dadurch gekennzeichnet, dass** es Folgendes umfasst:
- eine Schneidmaschine (4) zum Schneiden der Vorform (1),
- einen Speicher (13), in dem eine ausgehend von einer Vorlage einer Vorform berechnete Schnittkontur (5) der Vorform (1) abgelegt ist, in der die Webfäden (9) eine Referenzanordnung aufweisen,
- eine Vorrichtung (10) für die Bildgebung der Vorform (1),
- eine Verarbeitungseinheit (11), die so konfiguriert ist, dass sie die Schneidmaschine (4) und die Bildgebungsvorrichtung (10) so steuert, dass sie einen Schnitt der Vorform ausführen und die folgenden Schritte umfassen, die darin bestehen:
∘ ein Bild von der Vorform (1) aufzunehmen,
∘ das Bild so zu verarbeiten, dass eine Abweichung in der Anordnung der optisch identifizierbaren Webfäden (3) gegenüber der Referenzanordnung bestimmt wird,
∘ die Schnittkontur (5) je nach der Abweichung zu korrigieren, und
∘ die Vorform nach der korrigierten Schnittkontur (13) zu schneiden.

8. System nach Anspruch 7, wobei:
- die Webfäden (9) nach einer Längsachse der Vorform (1) angeordnete Fäden und nach einer Querachse der Vorform (1) angeordnete Fäden umfassen, und
- die Referenzanordnung eine Anordnung ist, in der diese Längsfäden orthogonal zu diesen Querfäden angeordnet sind.

9. System nach einem beliebigen der vorstehenden Ansprüche 7 oder 8, wobei:
- die Schneidmaschine (4) dafür eingestellt ist, einen Schnitt der Vorform (1) nach einer Schnittkontur (5) auszuführen, und
- die Verarbeitungseinheit so konfiguriert ist, dass sie das Bild so verarbeitet, dass zumindest ein Orientierungspunkt (8) in der Weberei der Vorform (1) identifiziert wird, und die Schneidmaschine (4) so konfiguriert ist, dass sie ausgehend von der Identifizierung dieses Orientierungspunkts (8) automatisch ihre Position gegenüber der Vorform (1) korrigiert.

10. System nach Anspruch 9, wobei der Orientierungspunkt (8) dem Schnittpunkt von optisch identifizierbaren Fäden (3) entspricht.

11. System nach einem beliebigen der vorstehenden Ansprüche 7 bis 10, das eine Vorform (1) eines Bauteils einer Turbomaschine umfasst, wobei das Bauteil unter Folgenden gewählt wird: eine Schaufel, eine Plattform eines Gebläses, ein Keil, eine Auslassführungsleitschaufel oder ein Propeller.

## Claims

1. A method for cutting a preform (1) intended to produce a turbomachine part and consisting of weaving of a plurality of weaving threads (9), said weaving threads (9) comprising visually identifiable threads (3), according to a cutting contour (5) calculated from a preform model in which the weaving threads (9) present a reference layout,
said method comprising the steps of:
- taking an image of the preform (1),
- processing the image so as to determine a deviation in the layout of the visually identifiable weaving threads (3) relative to the reference layout,
- correcting the cutting contour (5) as a function of said deviation, and
- cutting the preform along the corrected cutting contour (13).

2. The method according to claim 1, wherein:
- the weaving threads (9) comprise threads arranged along a longitudinal axis of the preform (1) and threads arranged along a transversal axis of the preform (1), and
- the reference layout is a layout in which these longitudinal threads are arranged orthogonally to these transversal threads.

3. A method for cutting, by a cutting machine (4), of a preform (1) intended to produce a turbomachine part and consisting of weaving a plurality of weaving threads (9), said weaving threads (9) comprising visually identifiable threads (3),
said machine (4) being adjusted to make a cutting of the preform (1) along a cutting contour (5),
said method comprising the steps of:
- taking an image of the preform (1),
- processing the image so as to identify at least one point (8) of reference in the weaving of the preform (1), the cutting machine (4) automatically correcting its position relative to the preform (1), from the identification of this point (8) of reference, and
- cutting the preform (1) along the cutting contour (5).

4. The method according to claim 3, wherein the point (8) of reference corresponds to the intersection of visually identifiable threads (3).

5. A method for cutting, by a cutting machine (4), of a preform (1) intended to produce a turbomachine part and consisting of weaving a plurality of weaving threads (9), said weaving threads (9) comprising visually identifiable threads (3),
said machine (4) being adjusted to make a cutting of the preform (1) along a cutting contour (5), whereof the form is calculated by supposing that the weaving threads (9) present a reference layout,
said method comprising the steps of:
- automatically correcting the positioning of the cutting machine (4) relative to the preform (1), according to the steps of one of claims 3 or 4, and
- correcting the cutting contour (5), according to the steps of one of claims 1 or 2.

6. A method for manufacturing a turbomachine part, wherein a preform is cut out of this part, **characterized in that** cutting of this preform is carried out according to a method according to one of claims 1 to 5, said part being selected from: a vane, a fan platform, a wedge, a nozzle guide vane, or a propeller.

7. A cutting system (12) of a preform (1) intended to produce a turbomachine part and consisting of weaving a plurality of weaving threads (9), said weaving threads (9) comprising visually identifiable threads (3), **characterized in that** it comprises:
- a cutting machine (4) of the preform (1),
- a memory (13) in which a cutting contour (5) of the preform (1), calculated from a preform model in which the weaving threads (9) present a reference layout, is recorded,
- an imaging device (10) of the preform (1),
- a processing unit (11), configured for controlling the cutting machine (4) and the imaging device (10) so that they execute a cutting of the perform comprising the steps of:
∘ taking an image of the preform (1),
∘ processing the image so as to determine a deviation in the layout of the visually identifiable weaving threads (3) relative to the reference layout,
∘ correcting the cutting contour (5) as a function of said deviation, and
∘ cutting the preform along the corrected cutting contour (13).

8. The system according to claim 7, wherein:
- the weaving threads (9) comprise threads arranged along a longitudinal axis of the preform (1) and threads arranged along a transversal axis of the preform (1), and
- the reference layout is a layout in which these longitudinal threads are arranged orthogonally to these transversal threads.

9. The system according to one of claims 7 or 8, wherein:
- the cutting machine (4) is adjusted to make a cutting of the preform (1) along a cutting contour (5), and
- the processing unit is configured for processing the image so as to identify at least one point (8) of reference in the weaving of the preform (1), the cutting machine (4) being configured for automatically correcting its position relative to the preform (1), from the identification of this point (8) of reference.

10. The system according to claim 9, wherein the point (8) of reference corresponds to the intersection of visually identifiable threads (3).

11. The system according to one of claims 7 to 10, comprising a preform (1) of turbomachine part, said part being selected from: a vane, a fan platform, a wedge, a nozzle guide vane, or a propeller.
